(19) Europäisches Patentamt

European Patent Office

Office européen des brevets

(11) **EP 0 930 483 B1**

(12) **EUROPÄISCHE PATENTSCHRIFT**

(45) Veröffentlichungstag und Bekanntmachung des Hinweises auf die Patenterteilung:
**28.04.2004 Patentblatt 2004/18**

(51) Int Cl.7: **G01G 19/02**, G01G 19/414

(21) Anmeldenummer: **98100809.7**

(22) Anmeldetag: **19.01.1998**

(54) **Bestimmung der Lage der horizontalen Längsachse eines Fahrzeugs mit Hilfe von Gewichtsmessungen**

Determining the position of the longitudinal axis of a vehicle by using a weight measurement

Détermination de la position de l'axe longitudinal d'un véhicule en employant des moyens de mesure de poids

(84) Benannte Vertragsstaaten:
**DE ES FR GB IT**

(43) Veröffentlichungstag der Anmeldung:
**21.07.1999 Patentblatt 1999/29**

(73) Patentinhaber: **VisiCon Automatisierungstechnik GmbH**
**37130 Gleichen-Wöllmarshausen (DE)**

(72) Erfinder: **Keller, Wiprecht, Dr.**
**28857 Syke (DE)**

(74) Vertreter: **Patentanwälte Rehberg + Hüppe**
**Postfach 31 62**
**37021 Göttingen (DE)**

(56) Entgegenhaltungen:
WO-A-95/02167    DE-A- 2 641 652
US-A- 4 969 112

- PATENT ABSTRACTS OF JAPAN vol. 007, no. 002 (P-166), 7.Januar 1983 & JP 57 163826 A (NIPPON DENKI KK), 8.Oktober 1982,
- "Centre of gravity indicator for load vehicles" RESEARCH DISCLOSURE., Nr. 203, März 1981, HAVANT GB, Seite 110 XP002066611

**Beschreibung**

Die Erfindung bezieht sich auf ein Verfahren zur Bestimmung der Lage der horizontalen Längsachse eines Fahrzeugs mit mindestens drei Rädern. Weiterhin bezieht sich die Erfindung auf eine Vorrichtung zur Durchführung eines solchen Verfahrens.

Die Lage der horizontalen Längsachse eines Fahrzeugs muß beispielsweise dann bestimmt werden, wenn die Ausrichtung der Scheinwerfer des Fahrzeugs eingestellt oder überprüft werden soll. Bei der Einstellung der Scheinwerfer eines Fahrzeugs handelt es sich um eine Winkeleinstellung, wobei die Strahlrichtung der Scheinwerfer horizontal und vertikal eingestellt wird. Die Bezugsachse für die horizontale Einstellung ist die horizontale Längsachse des Fahrzeugs, welche ihrerseits im Idealfall identisch mit der Fahrtrichtung des Fahrzeugs bei nicht eingeschlagener, d. h. neutraler Lenkung ist.

Bei einem ersten bekannten Verfahren (siehe beipielsweise DE-A-26 41 652) der eingangs beschriebenen Art wird ein Fahrzeug mit vier Rädern auf vier in Querrichtung leicht beweglichen Platten, sogenannten Schiebeplatten, oder auf vier Rollensätzen positioniert. Mit Hilfe von vier mechanischen Schiebern wird das Fahrzeug symmetrisch und mit gleicher Kraft entweder über die Reifeninnenseiten oder die Reifenaußenseiten aller vier Räder oder über vier in der Nähe von Vorder- bzw. Hinterachse gelegenen Bereiche der Karosserie, bei denen es sich in der Regel um die Stoßfänger handelt, ausgerichtet, so daß die horizontale Längsachse des Fahrzeugs parallel zur Symmetrieachse der Ausrichteinheit verläuft. Im Sinne einer der Fahrtrichtung des Fahrzeugs entsprechenden Ausrichtung sind dabei die Varianten vorzuziehen, bei denen die Schieber an den Reifen angreifen. Eine Ausrichtung des Fahrzeugs über die Karosserie muß nicht notwendiger Weise eine korrekte Ausrichung bezüglich der Fahrtrichtung bedeuten.

Bei einem zweiten bekannten Verfahren der eingangs beschriebenen Art wird mit Hilfe von geeigneten, beispielsweise optischen oder akustischen Sensoren, an jeweils zwei Positionen auf jeder Seite des Fahrzeugs der Abstand zwischen dem Fahrzeug und einem ortsfesten Bezugspunkt bestimmt. Bei geeigneter Anordnung der Sensoren kann so die Ausrichtung der horizontalen Längsachse des Fahrzeugs relativ zur Symmetrieachse der Meßeinrichtung bestimmt werden.

Die beiden bislang beschriebenen bekannten Verfahren zur Bestimmung der Lage der horizontalen Längsachse eines Fahrzeugs mit mindestens drei Rädern erfordern einen erheblichen apparativen Aufwand bei der Umsetzung, sie sind daher aus wirtschaftlicher Sicht nicht besonders günstig.

Im Automobilbau erfolgt die Bestimmung der Lage der horizontalen Längsachse eines Fahrzeugs für die Einstellung der Scheinwerfer des Fahrzeugs üblicherweise am Ende der Herstellung des Fahrzeugs.

Ebenfalls zum Ende der Herstellung eines Fahrzeugs ist es üblich, die Gesamtmasse des Fahrzeugs zu bestimmen. Über die Gesamtmasse des Fahrzeugs ist überprüfbar, ob das Fahrzeug tatsächlich die gewollte Ausstattung aufweist, soweit sich die Ausstattung auf die Gesamtmasse auswirkt.

Zur Bestimmung des Gesamtmasse ist es bekannt (siehe beispielsweise US-A-4 969 112), das Fahrzeug auf Stützplatten abzustellen, wobei jedes der Räder auf einer Stützplatte zu stehen kommt. Unter den Stützplatten sind Kraftmeßzellen angeordnet, die die Stützplatten tragen. Die Summe der Signale der sämtliche Stützplatten tragenden Kraftmeßzellen ist ein Maß für die Gesamtmasse des Fahrzeugs.

Vom Fertigungsablauf her ist es durchaus üblich, die Bestimmung der Gesamtmasse mit der Einstellung der Scheinwerfer des Fahrzeugs zu kombinieren.

JP-A-57 165 826 beschreibt eine Wägeplattform, die auf drei Kraftmesszellen ruht. Durch getrennte Auswertung der Signale der einzelnen Kraftmesszellen, wird der Schwerpunkt des aufgelegten Wägegutes auf der Wägeplattform ermittelt.

Der Erfindung liegt die Aufgabe zugrunde, ein neues Verfahren der eingangs beschriebenen Art aufzuzeigen, das besonders wirtschaftlich durchführbar ist. Weiterhin soll eine Vorrichtung zur Durchführung des neuen Verfahrens aufgezeigt werden.

Erfindungsgemäß wird diese Aufgabe bei einem Verfahren der eingangs beschriebenen Art dadurch gelöst, daß das Fahrzeug auf Stützplatten abgestellt wird, wobei jedes der Räder auf einer Stützplatte zu stehen kommt, und daß für jedes der Räder die horizontale Lage eines Schwerpunkts einer von dem Rad auf die jeweilige Stützplatte übertragenen Gewichtskraft des Fahrzeugs bestimmt wird, wozu horizontale Koordinaten und Ausgangssignale von unterhalb der jeweiligen Stützplatte angeordneten Kraftmeßzellen verwendet werden, die die jeweilige Stützplatte tragen und von denen mindestens zwei einen unterschiedlichen Abstand zu der Längsachse aufweisen.

Das neue Verfahren basiert auf einer Bestimmung von Gewichtskräften, die von den Rädern des Fahrzeugs auf die Stützplatten ausgeübt werden, auf denen das Fahrzeug abgestellt wird. Dabei kommt es jedoch nicht auf den Betrag der Gewichtskräfte an, sondern auf den horizontalen Ort des Schwerpunkts der von jedem der Räder auf die jeweilige Stützplatte übertragenen Gewichtskraft. Zur Bestimmung dieses Orts müssen neben den Ausgangssignalen von unterhalb der jeweiligen Stützplatte angeordneten Kraftmeßzellen auch deren Koordinaten verwendet werden. Von den die jeweilige Stützplatte tragenden Kraftmeßzellen müssen überdies mindestens zwei einen unterschiedlichen Abstand zu der zu bestimmenden Längsachse aufweisen, damit eine sinnvolle Aussage über die Lage der horizontalen Längsachse des Fahrzeugs aus den Ausgangssignalen und den Koordinaten der Kraftmeßzellen ermittelbar ist.

Das der Erfindung zugrundeliegende Meßprinzip läßt sich an einem Beispiel verdeutlichen. S sei der Abstand zwischen zwei Kraftmeßzellen, die eine Stützplatte tragen. F sei die von dem auf die Stützplatte abgestellten Rad auf die Stützplatte ausgeübte Gewichtskraft. Dann ergibt sich der horizontale Abstand X des Schwerpunkts der Gewichtskraft von der einen Kraftmeßzelle in Richtung zu der anderen Kraftmeßzelle gemäß

$$X = S / 2 * [1-(F1-F2) / (F1+F2)],$$

wobei F1 die von der einen Kraftmeßzelle und F2 die von der anderen Kraftmeßzelle registrierten Teilkräfte von F sind.

Für eine Bestimmung der horizontalen Längsachse ist es besonders wichtig, daß die horizontale Lage des Schwerpunkts der von jedem der Räder auf die jeweilige Stützplatte übertragenen Gewichtskraft des Fahrzeugs in einer Richtung bestimmt wird, die quer zu der Längsachse verläuft. Vorzugsweise handelt es sich um eine möglichst senkrecht zu der Längsachse verlaufende Richtung, die der Richtung der Achsen des Fahrzeugs entspricht. Die Lage des Schwerpunkts der von jedem der Räder auf die jeweilige stützplatte übertragenen Gewichtskraft des Fahrzeugs in Richtung der Längsachse kann dabei passiv festgelegt werden, indem beispielsweise Anschläge für die Räder vorgesehen sind oder die Räder von Vertiefungen aufgenommen werden. Allein die Anordnung der Räder auf den Stützplatten kann aber schon für eine Lagedefinition in der Richtung der Längsachse des Fahrzeugs ausreichen, zumal sich die Stützplatten für die Räder einer Achse bezüglich der Längsachse gegenüberliegen.

Vollständige Informationen über die horizontale Lage des Schwerpunkts der von jedem der Räder auf die jeweilige Stützplatte übertragenen Gewichtskraft werden dann erhalten, wenn diese Lage in zwei unabhängigen horizontalen Richtungen bestimmt wird.

Der Mittelwert der horizontalen Lagen der zu einer Achse des Fahrzeugs gehörenden Schwerpunkte der von den Rädern der Achse auf die jeweilig liegenden Stützplatten übertragenen Gewichtskräfte des Fahrzeugs steht für den horizontalen Schnittpunkt der Achse mit der Längsachse des Fahrzeugs. Wird dieser Mittelwert für zwei Achsen des Fahrzeugs gebildet, ist die horizontale Längsachse des Fahrzeugs durch die beiden Schnittpunkte vollständig bestimmt.

Die Ausgangssignale der unterhalb aller Stützplatten angeordneten Kraftmeßzellen können neben der Bestimmung der Lage der horizontalen Längsachse des Fahrzeugs auch dazu benutzt werden, die Gesamtmasse des Fahrzeugs zu bestimmen.

Darüberhinaus sind die für die Bestimmung der Lage der horizontalen Längsachse des Fahrzeugs erforderlichen horizontalen Koordinaten und die Ausgangssignale der unterhalb aller Stützplatten angeordneten Kraftmeßzellen geeignet, die Masseverteilung des Fahrzeugs zu bestimmen. Dabei kann der Gesamtmasseschwerpunkt des Fahrzeugs ebenso bestimmt werden, wie die Verteilung der Gesamtmasse des Fahrzeugs auf dessen Achsen oder Spuren. In den beiden letzten Fällen ist die Berücksichtigung der einzelnen horizontalen Koordinaten der unterhalb der Stützplatten jeweils einer Achse bzw. Spur des Fahrzeugs angeordneten Kraftmeßzellen nicht erforderlich. Es reicht vielmehr aus, festzustellen, wie groß die Gewichtskraft ist, die von den Stützplatten jeweils einer Achse bzw. Spur des Fahrzeugs aufgenommen wird. In jedem Fall kann mit den angesprochenen differenzierten Gewichtsmessungen genauer als durch die Bestimmung des Gesamtmasse des Fahrzeugs überprüft werden, ob das Fahrzeug beispielsweise tatsächlich vorgesehene Zusatzausstattungen aufweist.

Bereits angedeutet wurde die einfachste Ausführungsform des neuen Verfahrens, bei dem die Ausgangssignale von jeweils zwei unterhalb jeder Stützplatte angeordneten Kraftmeßzellen verwendet werden. Bevorzugt sind aber Ausführungsformen des Verfahrens, bei dem die Ausgangssignale von jeweils drei in den Ecken eines horizontalen Dreiecks oder von vier in den Ecken eines horizontalen Vierecks unterhalb jeder Stützplatte angeordneten Kraftmeßzellen verwendet werden, um die horizontale Lage des Schwerpunkts der von jedem Rad des Fahrzeugs auf die jeweilige Stützplatte übertragenen Gewichtskraft zu bestimmen. So werden nicht nur vollständige Informationen über die horizontale Lage des jeweiligen Schwerpunkts gewonnen, sondern es wird auch der Umsetzung der Gewichtskraft auf die jeweilige Stützplatte in Kippmomente entgegengewirkt. Zur vereinfachten Auswertung ist das horizontale Dreieck bei drei Kraftmeßzellen möglichst gleichschenklig bzw. das horizontale Viereck möglichst rechtwinklig.

Unter Verwendung der zuvor bestimmten Lage der horizontalen Längsachse des Fahrzeugs wird bei einer besonders interessanten Ausführungsform des neuen Verfahrens eine Einstellung von Scheinwerfern des Fahrzeugs vorgenommen und/oder überprüft. Dabei können gleichzeitig die Ausgangssignale der Kraftmeßzellen zumindest für eine Bestimmung des Gesamtmasse des Fahrzeugs genutzt werden.

Eine Vorrichtung für die Bestimmung der Lage der horizontalen Längsachse eines Fahrzeugs mit mindestens drei Rädern, gemäß dem neuen Verfahren, mit Stützplatten für jedes der Räder, mit unterhalb jeder Stützplatte angeordneten Kraftmeßzellen, die die jeweilige Stützplatte tragen und von denen mindestens zwei einen unterschiedlichen Abstand zu der Längsachse aufweisen, und mit einer Auswerteeinheit für die Ausgangssignale der Kraftmeßzellen ist erfindungsgemäß dadurch gekennzeichnet, daß die Auswerteeinheit zur getrennten Auswertung der Ausgangssignale der einzelnen Kraftmeßzellen vorgesehen ist und einen Speicher für die Koordinaten der einzelnen Kraftmeßzellen unterhalb jeder Stützplatte aufweist. Durch die kennzeichnenden Merkmale unterscheidet sich die neue Vorrichtung von einer Vorrichtung zur üblichen Bestimmung der Gesamtmasse des Fahrzeugs.

Die Erfindung wird im folgenden anhand von Ausführungsbeispielen näher erläutert und beschrieben. Dabei zeigt

Figur 1      das bei dem neuen Verfahren ausgenutzte Meßprinzip,

Figur 2      eine erste Ausführungsform der Vorrichtung zur Durchführung des neuen Verfahrens in schematischer Darstellung,

Figur 3      eine zweite Ausführungsform der Vorrichtung in schematischer Darstellung und

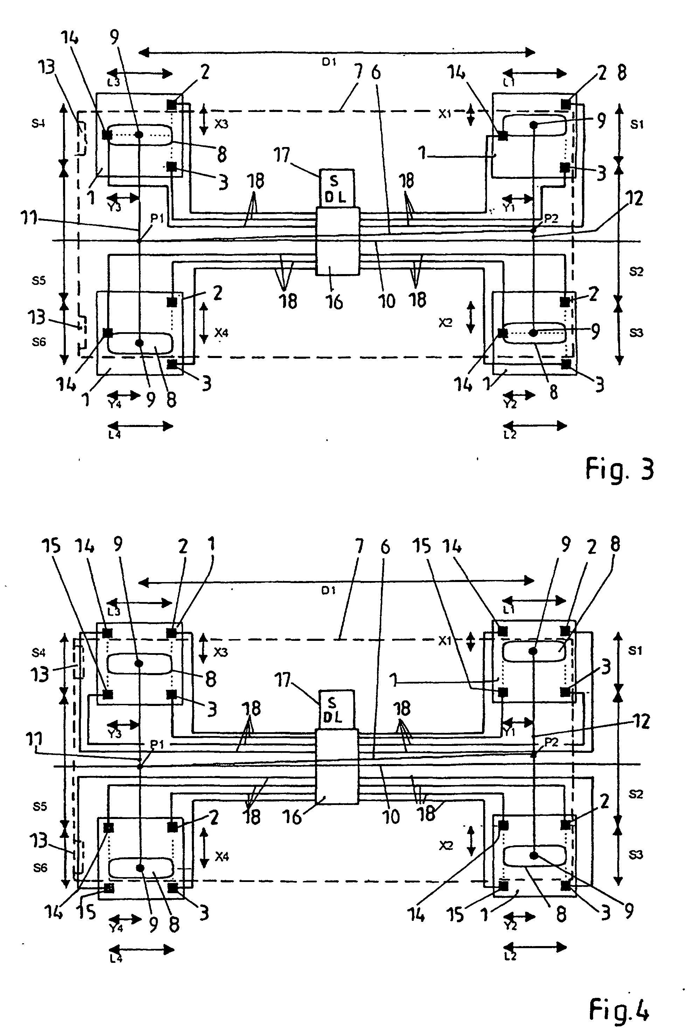

Figur 3      eine Dritte Ausführungsform der Vorrichtung in schematischer Darstellung.

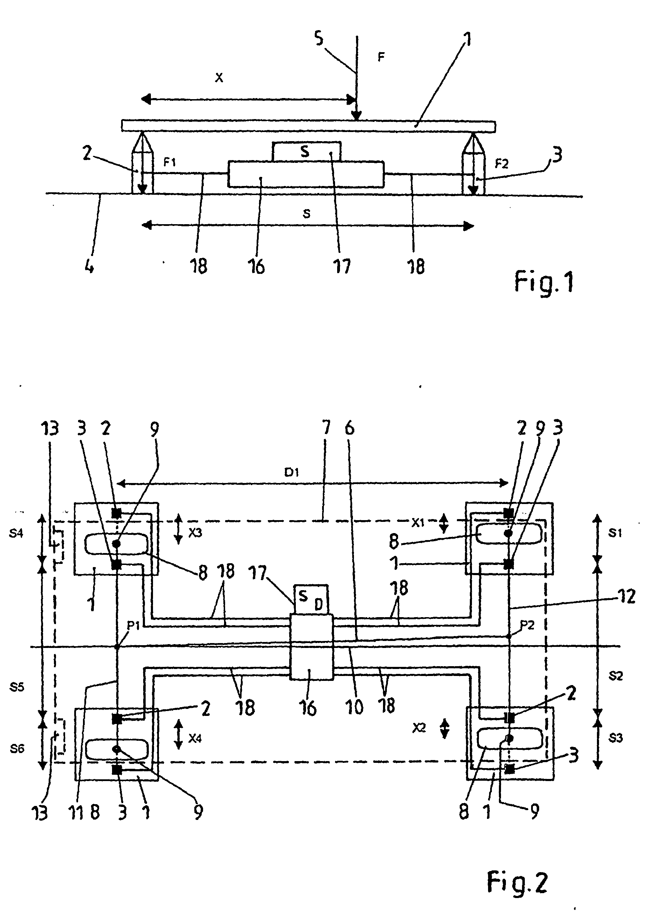

In Figur 1 ist eine Stützplatte 1 wiedergegeben, die sich über zwei Kraftmeßzellen 2 und 3 auf einem Boden 4 abstützt. Die Kraftmeßzellen 2 und 3 sind in einem horizontalen Abstand S zueinander angeordnet. Eine Kraft F greift in der vertikalen Richtung eines Pfeils 5 an der Stützplatte 1 an. Der Pfeil 5 weist zu der einen Kraftmeßzelle 2 einen horizontalen Abstand X auf. Die Kraft F wird durch beide Kraftmeßzellen 2 und 3 auf den Boden 4 übertragen, wobei die eine Kraftmeßzelle 2 eine Kraft F1 und die andere Kraftmeßzelle 3 eine Kraft F2 aufnimmt. Die Kraftmeßzellen 2 und 3 geben den Kräften F1 und F2 entsprechende Ausgangssignale an eine Auswerteeinheit 16 ab, die einen Speicher 17 für die horizontalen Koordinaten der Kraftmeßzellen 2 und 3, d.h. für ihren Abstand S aufweist. Aus den ihr zur Verfügung stehenden Daten berechnet die Auswerteeinheit den Abstand X gemäß

$$X = S / 2 * [1-(F1-F2) / (F1+F2)].$$

D.h., aus den Ausgangssignalen 18 der Kraftmeßzellen 2 und 3, die den Kräften F1 und F2 entsprechen, läßt sich beispielsweise die horizontale Lage des Schwerpunkts einer auf die Stützplatte 1 übertragenen Gewichtskraft bestimmen.

Dieses Prinzip wird bei der Vorrichtung gemäß Figur 2 genutzt, um die horizontale Längsachse 6 eines Fahrzeugs 7 zu bestimmen, das vier Räder 8 aufweist. Jedes der Räder 8 steht auf einer Stützplatte 1 auf, wobei die von dem jeweiligen Rad 8 auf die Stützplatte 1 übertragene Gewichtskraft einen Schwerpunkt 9 aufweist. Die horizontale Lage dieses Schwerpunkts 9 in Richtung senkrecht zu einer Symmetrieachse 10 der in Figur 2 dargestellten Vorrichtung wird von der Auswerteeinrichtung 16 aus den Ausgangssignalen 18 von unterhalb jeder Stützplatte 1 angeordneten Kraftmeßzellen 2 und 3 gemäß Figur 1 bestimmt. Dabei werden auch die in Figur 2 eingezeichneten Abstände S1 bis S6 und D1 verwendet, bei denen es sich um in dem Speicher 17 abgelegte Gerätekonstanten der Vorrichtung handelt. Aus den Koordinaten der Kraftmeßzellen 2 und 3, die durch die Abstände S1 bis S6 und D1 festgelegt sind, und den Ausgangssignalen 18 der Kraftmeßzellen 2 und 3 werden zunächst die Abstände X1 bis X4 ermittelt. Hieraus ergeben sich Schnittpunkte P1 und P2 zwischen der Längsachse 6 des Fahrzeugs 7 und einer Vorderachse 11 und einer Hinterachse 12 des Fahrzeugs 7. Damit ist die horizontale Längsachse 6 vollständig definiert. Ihre Lage kann bei der Einstellung von Scheinwerfern 13 des Fahrzeugs 7 als Bezugsachse verwendet werden. Die horizontale Lage der Schwerpunkte 9 ist darüberhinaus ein Maß für die Spurweite des Fahrzeugs 7 an der Vorderachse 11 und der Hinterachse 12.

Die Durchführung des Verfahrens zur Bestimmung der Längsachse 6 des Fahrzeugs 7 gemäß Figur 2 nach dem Grundprinzip gemäß Figur 1 setzt voraus, daß die gesamte Gewichtskraft, die von den Rädern 8 auf die Stützplatten 1 übertragen wird, von den darunter angeordneten Kraftmeßzellen 2 und 3 abgetragen wird. Dies ist bei der Anordnung von nur zwei Kraftmeßzellen 2 und 3 unter jeder Stützplatte 1 nicht immer problemlos sicherzustellen, weil den Stützplatten 1 Kippmomente um die Verbindungslinie der Kraftmeßzellen 2 und 3 mitgeteilt werden, wenn sich der Schwerpunkt der von dem jeweiligen Rad übertragenen Gewichtskraft nicht genau über dieser Verbindungslinie befindet. Um diesem Problem zu begegnen sind bei der Ausführungsform der Vorrichtung gemäß Figur 3 jeweils drei Kraftmeßzellen 2, 3, 14 unter jeder Stützplatte 1 angeordnet. Dabei befinden sich die Kraftmeßzellen 2, 3, 14 in den Eckpunkten eines horizontal ausgerichteten gleichschenkligen Dreiecks unter jeder Stützplatte 1, wobei eine Winkelhalbierende zwischen den gleichen Schenkeln des Dreiecks parallel zu der Symmetrieachse 10 der Vorrichtung verläuft. Diese Anordnung der Kraftmeßzellen 2, 3, 14 unter den Stützplatten 1 gemäß Figur 3 erlaubt die vollständige Bestimmung der horizontalen Lage der Schwerpunkte 9 der von den einzelnen Rädern 8 übertragenen Gewichtskräfte und damit eine vollständige Bestimmung der horizontalen Längsachse 6 des Fahrzeugs 7. Darüberhinaus kann mit der Vorrichtung gemäß Figur 3 beispielsweise auch der Radstand des Fahrzeugs 7 überprüft werden. Die bei der Vorrichtung gemäß Figur 3 gegenüber Figur 2 zusätzlich auftretenden Abstände L1 bis L4 sind Gerätekonstanten, die als Koordinaten in dem Speicher 17 abgelegt sind. Die Abstände Y1 bis Y4 in Richtung der Symmetrieachse 10 sind aus den zusätzlichen Ausgangssignalen 18 der Kraftmeßzellen 14 eindeutig ermittelbar.

Bei der Ausführungsform der Vorrichtung gemäß Figur 4 sind jeweils vier Kraftmeßzellen 2, 3, 14, 15 unter jeder Stützplatte 1 angeordnet. Hierdurch ergibt sich eine besonders verkippsichere Abstützung jeder Stützplatte 1. Die vier Ausgangssignale 18 der in den Ecken eines horizontalen Quadrats unterhalb jeder Stützplatte 1 angeordneten Kraftmeßzellen 2, 3, 14, 15 resultieren in eine Überbestimmung des jeweiligen Schwerpunkts 9 der auf die jeweilige Stützplatte 1 einwirkenden Gewichtskraft des Fahrzeugs 7. Hierdurch kann die Auswerteeinheit 16 jedoch eine Kontrollfunktion aufweisen, die die Überbestimmung ausnutzt, um die Bestimmung der horizontalen Lage des jeweiligen Schwerpunkts 9 intern zu überprüfen.

Die Vorrichtungen gemäß den Figuren 2 bis 4 sind neben der Bestimmung der Lage der horizontalen Längsachse 6 des Fahrzeugs 7 auch dazu geeignet, die Gesamtmasse des Fahrzeugs 7 zu bestimmen. Hierzu sind die Ausgangssignale 18 aller Kraftmeßzellen 2 und 3 und ggf. 13 und 14 bei der Auswertung in der Auswerteeinheit 16 zusammenzufassen. Die horizontalen Koordinaten der Kraftmeßzellen sind dabei unerheblich. Bei einer Überprüfung der Masseverteilung des Fahrzeugs auf die einzelnen Achsen oder Spuren sind die Ausgangssignale 18 der Kraftmeßzellen unterhalb der Stützplatten 1 der jeweiligen Achse 11, 12 bzw. Spur zusammenzufassen. Aus den Ausgangssignalen 18 der Kraftmeßzellen und ihren Koordinaten läßt sich überdies der Gesamtmasseschwerpunkt des Kraftfahrzeugs 7 ermitteln. Damit stehen verschiedene Möglichkeiten der Überprüfung des Kraftfahrzeugs mit einer Sollvorgabe zur Verfügung, die parallel zu der Einstellung der Scheinwerfern 13 des Fahrzeugs 7 unter Verwendung der Lage der horizontalen Längsachse 6 des Fahrzeugs 7 erfolgen kann.

## BEZUGSZEICHENLISTE

| | |
|---|---|
| 1 - | Stützplatte |
| 2 - | Kraftmeßzelle |
| 3 - | Kraftmeßzelle |
| 4 - | Boden |
| 5 - | Pfeil |
| 6 - | Längsachse |
| 7 - | Fahrzeug |
| 8 - | Rad |
| 9 - | Schwerpunkt |
| 10 - | Symmetrieachse |
| | |
| 11 - | Vorderachse |
| 12 - | Hinterachse |
| 13 - | Scheinwerfer |
| 14 - | Kraftmeßzelle |
| 15 - | Kraftmeßzelle |
| 16 - | Auswerteeinheit |
| 17 - | Speicher |
| 18 - | Ausgangssignal |

**Patentansprüche**

1. Verfahren zur Bestimmung der Lage der horizontalen Längsachse eines Fahrzeugs mit mindestens drei Rädern, wobei

   - das Fahrzeug (7) auf Stützplatten (1) abgestellt wird, wobei jedes der Räder (8) auf einer Stützplatte (1) zu stehen kommt, **dadurch gekennzeichnet,**
   - **daß** für jedes der Räder (8) die horizontale Lage eines Schwerpunkts (9) einer von dem Rad (8) auf die jeweilige Stützplatte (1) übertragenen Gewichtskraft des Fahrzeugs (7) bestimmt wird, wozu horizontale Koordinaten und Ausgangssignale (18) von unterhalb der jeweiligen Stützplatte angeordneten Kraftmeßzellen (2, 3, 14, 15) verwendet werden, die die jeweilige Stützplatte (1) tragen und von denen mindestens zwei einen unterschiedlichen Abstand zu der Längsachse (6) aufweisen.

2. Verfahren nach Anspruch 1, **dadurch gekennzeichnet, daß** die horizontale Lage des Schwerpunkts (9) der von jedem der Räder (8) auf die jeweilige Stützplatte (1) übertragenen Gewichtskraft des Fahrzeugs (7) zumindest in einer Richtung bestimmt wird, die quer zu der Längsachse (6) verläuft.

3. Verfahren nach Anspruch 1 oder 2, **dadurch gekennzeichnet, daß** der Mittelwert der horizontalen Lagen aller zu einer Achse des Fahrzeugs gehörenden Schwerpunkte der von den Rädern (8) der Achse (11, 12) auf die jeweiligen Stützplatten (1) übertragenen Gewichtskräfte des Fahrzeugs (7) gebildet wird, um den horizontale Schnittpunkt der Achse (11, 12) mit der Längsachse (6) des Fahrzeugs (7) zu ermitteln.

4. Verfahren nach Anspruch 1, 2 oder 3, **dadurch gekennzeichnet, daß** die Ausgangssignale (18) der unterhalb aller Stützplatten (1) angeordneten Kraftmeßzellen (2, 3, 14, 15) verwendet werden, um die Gesamtmasse der Fahrzeugs (7) zu bestimmen.

5. Verfahren nach einem der Ansprüche 1 bis 4, **dadurch gekennzeichnet, daß** die horizontalen Koordinaten und die Ausgangssignale (18) der unterhalb aller Stützplatten (1) angeordneten Kraftmeßzellen (2, 3, 14, 15) verwendet werden, um die Masseverteilung des Fahrzeugs (7) zu bestimmen.

6. Verfahren nach einem der Ansprüche 1 bis 5, **dadurch gekennzeichnet, daß** die horizontalen Koordinaten und die Ausgangssignale (18) der unterhalb der Stützplatten (1) jeweils einer Achse (11, 12) oder Spur des Fahrzeugs (7) angeordneten Kraftmeßzellen (2, 3, 14, 15) verwendet werden, um die Masseverteilung des Fahrzeugs (7) zu bestimmen.

7. Verfahren nach einem der Ansprüche 1 bis 6, **dadurch gekennzeichnet, daß** die Ausgangssignale (18) von jeweils drei in den Ecken eines horizontalen Dreiecks unterhalb jeder Stützplatte (1) angeordneten Kraftmeßzellen (2, 3, 14) verwendet werden, um die horizontale Lage des Schwerpunkts (9) der von jedem Rad (8) des Fahrzeugs (7) auf die jeweilige Stützplatte (1) übertragenen Gewichtskraft zu bestimmen.

8. Verfahren nach einem der Ansprüche 1 bis 6, **dadurch gekennzeichnet, daß** die Ausgangssignale (18) von jeweils vier in den Ecken eines horizontalen Vierecks unterhalb jeder Stützplatte (1) angeordneten Kraftmeßzellen (2, 3, 14, 15) verwendet werden, um die horizontale Lage des Schwerpunkts (9) der von jedem Rad (8) des Fahrzeugs (7) auf die jeweilige Stützplatte (1) übertragenen Gewichtskraft zu bestimmen.

9. Verfahren nach einem der Ansprüche 1 bis 8, **dadurch gekennzeichnet, daß** unter Verwendung der Lage der horizontalen Längsachse (6) des Fahrzeugs (7) eine Einstellung von Scheinwerfern (13) des Fahrzeugs (7) vorgenommen und/oder überprüft wird.

10. Vorrichtung für die Bestimmung der Lage der horizontalen Längsachse (6) eines Fahrzeugs (7) mit mindestens drei Rädern (8), gemäß dem Verfahrens nach einem der Ansprüche 1 bis 9, mit Stützplatten (1) für jedes der Räder (8), mit unterhalb jeder Stützplatte angeordneten Kraftmeßzellen (2, 3, 14, 15), die die jeweilige Stützplatte (1) tragen und von denen mindestens zwei einen unterschiedlichen Abstand zu der Längsachse (6) aufweisen, und mit einer Auswerteeinheit (16) für die Ausgangssignale (18) der Kraftmeßzellen (2, 3, 14, 15), **dadurch gekennzeichnet, daß** die Auswerteeinheit (16) zur getrennten Auswertung der Ausgangssignale (18) der einzelnen Kraftmeßzellen (2, 3, 14, 15) vorgesehen ist und einen Speicher (17) für die Koordinaten der einzelnen Kraftmeßzellen (2, 3, 13, 14) unterhalb jeder Stützplatte (1) aufweist.

**Claims**

1. A method of determining the position of a horizontal longitudinal axis of a vehicle having at least three wheels, comprising

   - placing the vehicle (7) on supporting plates (1), each of the wheels (8) standing on one supporting plate (1), **characterized in**

   - **that** for each of the wheels (8) the horizontal position of a gravity centre (9) of a gravity force of the vehicle (7) which is transferred from the wheel (8) onto the respective supporting plate (1) is determined using horizontal coordinates and output signals (18) of load cells (2, 3, 14, 15) arranged under the respective supporting plate, said load cells (2, 3, 14, 15) supporting the respective supporting plate (1), and at least two of said load cells (2, 3, 14, 15) having a different distance to the longitudinal axis (6).

2. The method according to claim 1, **characterized in that** the horizontal position of the gravity centre (9) of the gravity force of the vehicle (7) transferred by each of the wheels (8) onto the respective supporting plate (1) is at least determined in one direction which runs across the longitudinal axis (6).

3. The method of claim 1 or 2, **characterized in that** the mean value of the horizontal positions of all gravity centres of the gravity force of the vehicle (7) transferred by the wheels (8) belonging to one axis (11, 12) onto the respective supporting plates (1) is calculated, to determine the horizontal intersection point of the axis (11, 12) with the longitudinal axis (6) of the vehicle (7).

4. The method of claim 1, 2 or 3, **characterized in that** the output signals (18) of the load cells (2, 3, 14, 15) arranged under all supporting plates (1) are used to determine the total mass of the vehicle (7).

5. The method according to any of the claims 1 to 4, **characterized in that** the horizontal coordinates and the output signals (18) of all load cells (2, 3, 14, 15) arranged under all supporting plates (1) are used to determine the mass distribution of the vehicle (7).

6. The method of any of the claims 1 to 5, **characterized in that** the horizontal coordinates and the output signals (18) of the load cells (2, 3, 14, 15) arranged under the supporting plates (1) of one axis (11, 12) or track of the vehicle (7) are used to determine the mass distribution of the vehicle (7).

7. The method of any of the claims 1 to 6, **characterized in that** the output signals (18) of three load cells (2, 3, 14) arranged in the corners of a horizontal triangle under each supporting plate (1) are used to determine the horizontal position of the gravity centre (9) of the gravity force transferred by each wheel (8) of the vehicle (7) onto the respective supporting plate (1).

**8.** The method of any of the claims 1 to 6, **characterized in that** the output signals (18) of four load cells (2, 3, 14, 15) arranged in the comers of a horizontal quadrangle under each supporting plate (1) are used to determine the horizontal position of the gravity centre (9) of the gravity force transferred by each wheel (8) of the vehicle (7) onto the respective supporting plate (1).

**9.** The method of any of the claims 1 to 8, **characterized in that** the headlights (13) of the vehicle (7) are adjusted or an adjustment of the headlights (13) of the vehicle (7) is checked using the position of the horizontal longitudinal axis (6) of the vehicle (7).

**10.** A device for determining the position of the horizontal longitudinal axis (6) of a vehicle (7) having at least three wheels (8) according to the method of any of the claims 1 to 9, the device comprising supporting plates (1) for each of the wheels (8) having load cells (2, 3, 14, 15) arranged under each supporting plate, said load cells (2, 3, 14, 15) supporting the respective supporting plate (1), and at least two of said load cells (2, 3, 14, 15) having a different distance to the longitudinal axis (6), and an evaluation unit (16) for the output signals (18) of the load cells (2, 3, 14, 15), **characterized in that** the evaluation unit (16) is provided for a separate evaluation of the output signals (18) of the single load cells (2, 3, 14, 15) and has a memory (17) for the coordinates of the single load cells (2, 3, 13, 14) under each supporting plate (1).

**Revendications**

**1.** Procédé pour déterminer la position de l'axe longitudinal horizontal d'un véhicule ayant au moins trois roues, le véhicule (7) étant placé sur des plaques d'appui (1) et chacune des roues (8) venant se placer sur une plaque d'appui (1), **caractérisé en ce que** pour chacune des roues (8) on détermine la position horizontale d'un centre de gravité (9) d'une force de poids du véhicule (7), transmise par la roue (8) à la plaque d'appui (1) respective, et l'on utilise pour cela des coordonnées horizontales et des signaux de sortie (18) de cellules de mesure de force (2, 3, 14, 15) disposées au-dessous de la plaque d'appui respective, lesquelles cellules portent la plaque d'appui (1) respective et dont au moins deux présentent une distance différente par rapport à l'axe longitudinal (6).

**2.** Procédé selon la revendication 1, **caractérisé en ce que** la position horizontale du centre de gravité (9) de la force de poids du véhicule (7), transmise par chacune des roues (8) à la plaque d'appui (1) respective, est déterminée au moins dans une direction qui s'étend transversalement à l'axe longitudinal (6).

**3.** Procédé selon la revendication 1 ou 2, **caractérisé en ce qu'**on forme la valeur moyenne des positions horizontales de tous les centres de gravité, faisant partie d'un essieu du véhicule, des forces de poids du véhicule (7), transmises par les roues (8) de l'essieu (11, 12) aux plaques d'appui (1) respectives, afin de déterminer le point d'intersection horizontal de l'essieu (11, 12) et de l'axe longitudinal (6) du véhicule (7).

**4.** Procédé selon la revendication 1, 2 ou 3, **caractérisé en ce que** les signaux de sortie (18) des cellules de mesure de force (2, 3, 14, 15), disposées au-dessous de toutes les plaques d'appui (1), sont utilisés pour déterminer la masse totale du véhicule (7).

**5.** Procédé selon l'une des revendications 1 à 4, **caractérisé en ce que** les coordonnées horizontales et les signaux de sortie (18) des cellules de mesure de force (2, 3, 14, 15), disposées au-dessous de toutes les plaques d'appui (1), sont utilisés pour déterminer la distribution de la masse du véhicule (7).

**6.** Procédé selon l'une des revendications 1 à 5, **caractérisé en ce que** les coordonnées horizontales et les signaux de sortie (18) des cellules de mesure de force (2, 3, 14, 15) disposées au-dessous des plaques d'appui (1) d'un essieu (11, 12) ou voie du véhicule (7), sont utilisées pour déterminer la distribution de la masse du véhicule (7).

**7.** Procédé selon l'une des revendications 1 à 6, **caractérisé en ce que** les signaux de sortie (18) de trois cellules de mesure de force (2, 3, 14), disposées dans chacun des angles d'un triangle horizontal au-dessous de chaque plaque d'appui (1), sont utilisés pour déterminer la position horizontale du centre de gravité (9) de la force de poids transmise par chaque roue (8) du véhicule (7) à la plaque d'appui (1) respective.

**8.** Procédé selon l'une des revendications 1 à 6, **caractérisé en ce que** les signaux de sortie (18) de quatre cellules de mesure de force (2, 3, 14, 15), disposées dans chacun des angles d'un quadrilatère horizontal au-dessous de chaque plaque d'appui (1), sont utilisés pour déterminer la position horizontale du centre de gravité (9) de la force de poids transmise par chaque roue (8) du véhicule (7) à la plaque d'appui (1) respective.

**9.** Procédé selon l'une des revendications 1 à 8, **caractérisé en ce qu'**on procède à et/ou contrôle un réglage des projecteurs (13) du véhicule (7) en utilisant la position de l'axe longitudinal (6) du véhicule (7).

10. Dispositif pour déterminer la position de l'axe longitudinal horizontal (6) d'un véhicule (7) ayant au moins trois roues (8) suivant le procédé selon l'une des revendications 1 à 9, comportant des plaques d'appui (1) pour chacune des roues (8), comportant des cellules de mesure de force (2, 3, 14, 15) disposées au-dessous de chaque plaque d'appui, lesquelles portent la plaque d'appui (1) respective et dont au moins deux présentent une distance différente par rapport à l'axe longitudinal (6), et comportant l'unité d'exploitation (16) pour les signaux de sortie (18) des cellules de mesure de force (2, 3, 14, 15), **caractérisé en ce que** l'unité d'exploitation (16) est prévue pour l'exploitation séparée des signaux de sortie (18) des différentes cellules de mesure de force (2, 3, 14, 15), et comporte une mémoire (17) pour les coordonnées des différentes cellules de mesure de force (2, 3, 13, 14) au-dessous de chaque plaque d'appui (1).

Fig.1

Fig.2

Fig. 3

Fig.4